## Europäisches Patentamt

## European Patent Office

## Office européen des brevets

(19)

(11) Publication number: **0 147 495**
**B1**

(12) **EUROPEAN PATENT SPECIFICATION**

(45) Date of publication of patent specification: **27.04.88**

(21) Application number: **84100064.9**

(22) Date of filing: **04.01.84**

(51) Int. Cl.⁴: **B 60 C 17/04**, B 60 B 21/12

(54) **Vehicle wheel having safety tread.**

(43) Date of publication of application:
**10.07.85 Bulletin 85/28**

(45) Publication of the grant of the patent:
**27.04.88 Bulletin 88/17**

(84) Designated Contracting States:
**AT BE CH DE FR GB IT LI NL SE**

(56) References cited:
**DE-C- 956 380**
**DE-C- 972 486**
**FR-A-2 198 848**
**NL-A-6 909 616**
**US-A-3 135 556**
**US-A-3 872 907**

(73) Proprietor: **De Kersauson de Trebaol, François Paul**
**6113 Piedmont Avenue**
**Los Angeles California 90042 (US)**

(72) Inventor: **De Kersauson de Trebaol, François Paul**
**6113 Piedmont Avenue**
**Los Angeles California 90042 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

This invention relates to vehicle wheels adapted to receive pneumatic tires having an inner safety tread.

Annular safety treads having a larger diameter than the rim of the wheel are used for protection in case the tire carried by the wheel becomes deflated. Such a safety tread is secured to the rim of the wheel between its edges in radially outward spaced relationship therefrom to prevent the edges of the rim from cutting the tire casing when the tire suffers a loss of air.

It is difficult to mount a tire on a wheel having a safety tread because of the large diameter required of the tread. To facilitate tire mounting, it is known from FR—A—2 198 848 to construct such a wheel generally of at least three parts; namely, an inside wheel part, an outside wheel part, and a safety foot assembly attached to the wheel parts for ease of insertion of the safety foot into the tire casing.

Furthermore, it is known from US—A—3 135 556 to divide the safety tread circumferentially into two parts, which have to be placed inside the tire casing separately from the wheel parts. Thereafter, both parts of the tread are secured to the same wheel part. In both cases the numerous parts of a wheel having a safety tread complicate the tire mounting procedure.

The invention permits a tire more easily to be mounted on a wheel having a safety tread.

According to the invention, a vehicle wheel comprises first and second circular wheel halves releasably secured together and an annular tread divided circumferentially into two or more parts that interface with each other on a bias so they can be brought together and separated by relative movement having a component transverse to the central axis of the wheel. One part of the foot is secured to one wheel half and the other part of the foot is secured to the other wheel half. As a result of the biased interface between the parts of the foot, the last part of the foot to enter the tire casing may readily be inserted therein by wedge action.

Brief Description of the Drawings

The features of a specific embodiment of the best mode contemplated of carrying out the invention are illustrated in the drawings, in which:

FIG. 1 is a perspective view of a vehicle wheel incorporating the principles of the invention;

FIG. 2 is a side view of the parts of the wheel of FIG. 1 separated from each other;

FIG. 3 is a front view of the wheel of FIG. 1;

FIG. 4 is a side view of the parts of another embodiment of the wheel of FIG. 1 separated from each other; and

FIG. 5 is a front view of the tread of FIG. 4.

Detailed Description of the Specific Embodiment

In the drawings, a vehicle wheel comprises a circular wheel half 10 and a circular wheel half 12.

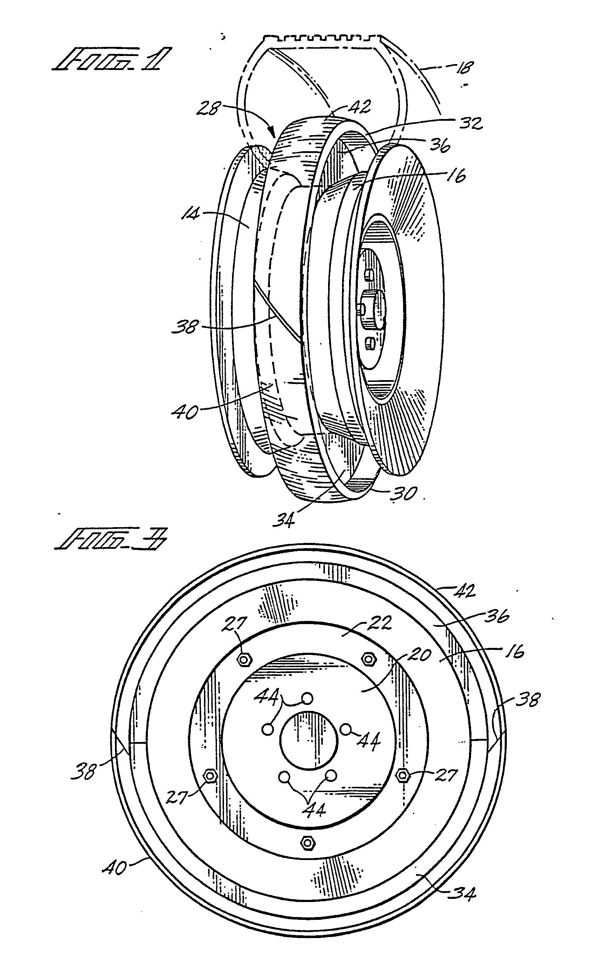

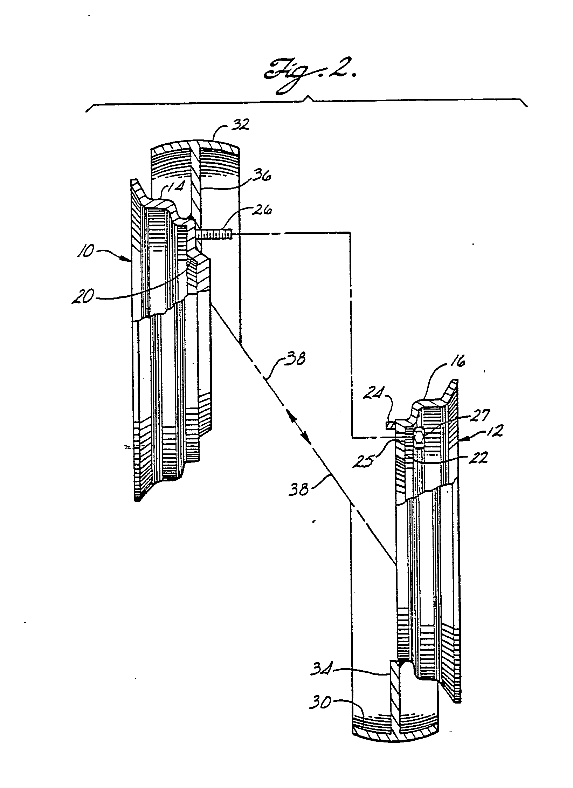

Wheel half 10 has an inside rim part 14 and wheel half 12 has an outside rim part 16. Together, rim parts 14 and 16 form a rim adapted to receive a pneumatic tire 18, represented in phantom in FIG. 1. Wheel half 10 also has a circular hub 20 within rim part 14. Wheel half 12 also has an annular inwardly extending flange 22 within rim part 16. The periphery of hub 20 is recessed to receive flange 22 and to permit the central portion of hub 20 to fit snugly into the annular region surrounded by flange 22. The mating surfaces of flange 22 and the central portion of hub 20 are preferably tapered at a small angle to the central axis of the wheel, e.g., 3° as illustrated in FIG. 2. Wheel half 10 has threaded bolts 26 fixedly mounted in holes in the recessed periphery of hub 20 and extending therefrom parallel to the central axis of wheel half 10. Wheel half 12 has holes 25 aligned with bolts 26. Wheel halves 10 and 12 are releasably secured and clamped by nuts 27 screwed onto bolts 26, when they lie in holes 25 with flange 22 and hub 20 mated. A sealing ring 24, which could be made, for example, of neoprene rubber is bonded to the surface of flange 22 where it joins rim part 16. As a result, an air-tight seal is formed at the interface of rim parts 14 and 16 when wheel halves 10 and 12 are secured together so that the wheel can be used with tubeless tires.

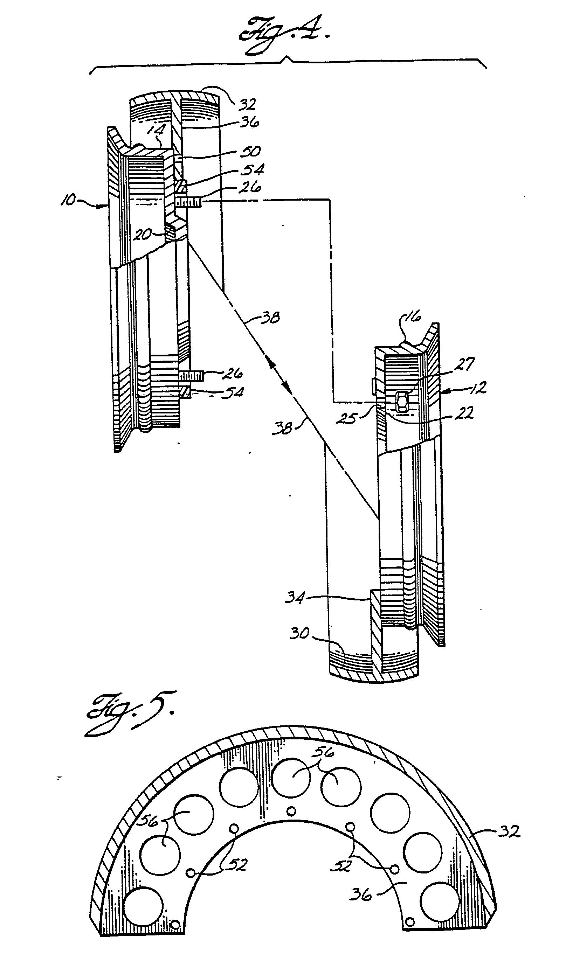

An annular safety tread or foot 28 is divided circumferentially into approximately equal interfacing parts 30 and 32. Tread 28 has a larger diameter than the rim. Part 30 is attached to rim part 16 by a radially outward extending web 34 and part 32 is attached to rim part 14 by a radially outward extending web 36 so that webs 34 and 36 and parts 30 and 32 are aligned with each other when wheel halves 10 and 12 are secured together. Tread 28 has edges that are curved somewhat toward the edges of the wheel rim to increase the area of contact with a deflated tire. Webs 34 and 36 join rim parts 14 and 16 midway between the curved edges. In the embodiment of FIGS. 2 and 3, rim part 14, hub 20, tread part 32, and web 34 are welded together or cast as a unit to form a one-piece construction. Similarly, rim part 16, flange 22, tread part 30, and web 36 are welded together or cast as a unit to form a one-piece construction.

Tread parts 30 and 32 interface with each other on a bias, as depicted in the drawings at 38, so that they can be brought together and separated by relative movement having a component transverse to the central axis of the wheel. In this way, after one rim part has been inserted into the tire casing, the other rim part can be slipped therein at an angle to the central axis of the wheel by wedging action between the interfaces of the foot parts. The bias of the interface on both sides of the wheel halves runs in the same direction, as depicted in FIG. 3. In other words, assuming that parts 30 and 32 are the same circumferential length in the middle, the right-hand edge of part 30, as viewed in FIG. 1, has a shorter circumferential length than the right-hand edge of part 32. Conversely, the left-hand edge of part 30 has a longer circumferential length than the left-hand edge of part 32.

Rubber treads 40 and 42 are bonded to the outer surface of parts 30 and 32, respectively, to prevent friction or slippage of the tire relative to the safety tread.

To install the described wheel, wheel half 10 is first mounted on the vehicle by bolting hub 20 onto the brake drum of the vehicle. The lugs of the vehicle pass through holes 44 in hub 20. Then a tire is mounted on rim part 14 with part 32 inside the tire casing. Finally, wheel half 12 is brought toward wheel half 10 out of alignment with its central axis. After the interfacing surfaces of tread parts 30 and 32 contact each other, part of the force exerted on wheel half 12 parallel to the central axis of the wheel is transferred by the wedging action between the interfacing surfaces of tread parts 30 and 32 in a direction transverse to the central axis, thereby sliding foot part 30 up into the tire casing while bringing wheel half 12 into axial alignment with wheel half 10 as flange 22 comes into abutment with the recessed periphery of hub 20.

It is easier to mount a tire on the described wheel because there are only two parts and these parts are brought into engagement with each other and the tread parts are inserted into the tire casing with the aid of the wedging action of the biased interfaces of tread parts 30 and 32.

In the embodiment of FIGS. 4 and 5, like reference numerals are used to identify like parts. In this embodiment, tread 28 is a separate piece clamped between wheel halves 10 and 12. A plurality of threadless lugs 50 extend from hub 20 toward flange 22. Lugs 50 are arranged in a circle around bolts 26. As illustrated in FIG. 5, web 36 has a plurality of bores for receiving respective lugs 50 on hub 20. Similarly, web 34 has a plurality of bores for receiving the remaining lugs 50 on hub 20. Lugs 50 and bores 52 serve to properly position, i.e., center tread 28 on the wheel and hold it in place until assembly is complete. An annular seal 54, such as for example neoprene rubber is secured to hub 20 between tread 28 and bolts 26 to prevent air leakage from the tire through the interface between hub 20 and flange 22. Holes 56 are formed in webs 34 and 36 to reduce the weight of tread 28. To install this embodiment of the wheel, wheel half 10 may be placed on the ground, then the tire may be placed around wheel half 10. Next, tread parts 30 and 32 are inserted into the interior of the tire so that bores 52 receive lugs 50. Finally, wheel half 12 is brought against webs 34 and 36 so holes 25 receive bolts 26 and nuts 27 are screwed onto bolts 26 in order to hold the parts of the wheel together.

Safety tread 28 of FIGS. 4 and 5, which is not welded to the wheel, could alternatively be divided into three or four pieces, as tire mounting requirements may dictate.

**Claims**

1. A vehicle wheel adapted to receive a pneumatic tire (18), the wheel comprising:

a first circular wheel part (10) having an inside part (14) of a rim adapted to receive a pneumatic tire (18);

a second circular wheel part (12) having an outside part (16) of the rim;

an annular tread (28) having a larger diameter than the rim and a central axis; and

means (26, 27) for releasably securing the wheel parts (10, 12) together;

characterised in that the tread (28) is divided circumferentially into two parts (30, 32) interfacing with each other on a bias (38) so that they can be brought together and separated by relative movement having a component transverse to the central axis, one part (30) of the tread (28) being secured to a first wheel half (10) and the other part (32) of the tread (28) being secured to a second wheel half (12).

2. The wheel of claim 1, in which the one part (30) of the tread (28) is fixedly secured to the first wheel (10) to form a one-piece construction and the other part (32) of the tread (28) is fixedly secured to the second wheel half (12) to form a one-piece construction.

3. The wheel of claim 1 or 2 in which the tread (28) has edges curved toward the rim.

4. The wheel of any of claims 1 to 3, in which the one part (30) of the tread (38) is secured to the first wheel half (10) by a web (34) extending radially outward from the first wheel half (10) to form a one-piece construction and the other part (32) of the tread (28) is secured to the second wheel half (12) by a web (36) extending radially outward from the second wheel half (12) to the other part (32) of the tread (28) to form a one-piece construction.

5. A vehicle wheel of any of claims 1 to 4 characterised in that the first circular wheel half (10) having a portion of the rim including one edge thereof and a circular hub (20) within the rim, the hub (20) having a recessed periphery and a protruding central portion;

the second wheel half (12) having the remainder of the rim including its other edge and an annular inwardly extending flange (22) defining a circular opening within the rim portion, the recessed periphery of the hub (20) receiving the flange (22) to permit the central portion of the hub (20) receiving the flange (22) to permit the central portion of the hub (20) to fit snugly into the annular region surrounded by the flange (22).

6. The wheel of claim 5, characterised in that the parts (30, 32) of the tread (28) have two interfaces on a bias (38), the bias (38) of both interfaces running in the same direction.

7. The wheel of claim 5, in which the securing means comprises means for clamping the flange (22) to the hub (20).

8. The wheel of any of claims 5 to 7, in which the mating surfaces of the recessed periphery and the flange (22) are tapered to facilitate their alignment.

## Patentansprüche

1. Fahrzeugrad zum Aufnehmen einer Luftbereifung (18), wobei das Rad enthält:
ein erstes kreisförmiges Radteil (10) mit einem inneren Reil (14) einer Felge, die zur Aufnahme der Luftbereifung (18) ausgebildet ist;
ein zweites kreisförmiges Radteil (12) mit einem äußeren Teil (16) der Felge;
einen ringförmigen Absatz (28), der einen größeren Durchmesser als die Felge aufweist, und eine Mittelachse; und
eine Einrichtung (26, 27) zum lösbaren Befestigen der Radteile (10, 12) aneinander;
dadurch gekennzeichnet, daß der Absatz (28) in Umfangsrichtung in zwei Teile (30, 32) geteilt ist, die entlang einer Schräge (38) aneinander angrenzen, so daß sie zusammengebracht und voneinander getrennt werden können durch eine Relativbewegung, die eine quer zur Mittelachse verlaufende Komponente aufweist, wobei ein Teil (30) des Absatzes (28) an einer ersten Radhälfte (10) befestigt ist und der andere Teil (32) des Absatzes (28) an einer zweiten Radhälfte (12) befestigt ist.

2. Rad nach Anspruch 1, wobei der eine Teil (30) des Absatzes (28) zu einer einteiligen Konstruktion festgelegt ist und wobei der andere Teil (32) des Absatzes (28) mit der zweiten Radhälfte (12) zu einer einteiligen Konstruktion festgelegt ist.

3. Rad nach Anspruch 1 oder 2, wobei der Absatz (28) gegen die Felge gekrümmte Kanten aufweist.

4. Rad nach einem der Ansprüche 1 bis 3, wobei der eine Teil (30) des Absatzes (28) durch einen sich radial auswärts von der ersten Radhälfte (10) erstreckenden Steg (34) an der ersten Radhälfte (10) zu einer einteiligen Konstruktion festgelegt ist, und wobei der andere Teil (32) des Absatzes (28) durch einen sich radial auswärts von der zweiten Radhälfte (12) zum anderen Teil (32) des Absatzes (28) erstreckenden Steg (36) zu einer einteiligen Konstruktion verbunden ist.

5. Fahrzeugrad nach einem der Ansprüche 1 bis 4, dadurch gekennzeichnet, daß die erste kreisförmige Radhälfte (10), die einen Teil der Felge mit einer ihrer Kanten aufweist, eine kreisförmige Nabe (20) innerhalb der Felge enthält, wobei die Nabe (20) einen eingesenkten Umfang und einen vorstehenden zentralen Bereich aufweist;
die zweite Radhälfte (20), die den Rest der Felge einschließlich ihrer anderen Kante aufweist, einen ringförmig nach innen vorstehenden Flansch (22) enthält, der eine kreisförmige Öffnung innerhalb des Felgenbereichs definiert, wobei der eingesenkte Umfang der Nabe (20) den Flansch (22) aufnimmt, so daß der zentrale Bereich der Nabe (20) eng eingepaßt ist in den vom Flansch (22) umgebenen ringförmigen Bereich.

6. Rad nach Anspruch 5, dadurch gekennzeichnet, daß die Teile (30, 32) des Absatzes (28) zwei Grenzflächen an einer Schräge (38) aufweisen, wobei die Schräge (38) beider Grenzflächen in der fleichen Richtung verlaufen.

7. Rad nach Anspruch 5, wobei die Einrichtung zur Befestigung Mittel zum Festspannen des Flansches (22) an der Nabe (20) enthält.

8. Rad nach einem der Ansprüche 5 bis 7, wobei die miteinander in Eingriff stehenden Oberflächen des eingesenkten Umfanges und des Flansches (22) konisch verlaufen, um ihre Ausrichtung zueinander zu erleichtern.

## Revendications

1. Roue de véhicule prévue pour recevoir un pneumatique (18), la roue comportant:
une première partie circulaire (10) de la roue présentant une partie intérieure (14) d'une jante prévue pour recevoir un pneumatique (18);
une seconde partie circulaire (12) de la roue présentant une partie extérieure (16) de la jante;
une anneau (28) présentant un diamètre supérieur à celui de la jante et un axe central; et
des moyens (26, 27) pour fixer ensemble, de façon amovible, les parties (10, 12) de la roue;
caractérisée en ce que l'anneau (28) est divisé circonférentiellement en deux parties (30, 32) qui viennent s'accoler l'une avec l'autre selon une oblique (38), de façon que l'on puisse les regrouper et les séparer par un déplacement relatif présentant une composante transversale par rapport à l'axe central, une partie (30) de l'anneau (28) étant fixée à une première demi-roue (10) et l'autre partie (32) de l'anneau (28) étant fixée à une seconde demi-roue (12).

2. Roue selon la revendication 1, dans laquelle la partie (30), mentionnée en premier lieu, de l'anneau (28) est fermement fixée à la première demi-roue (10) pour former une construction d'une seule pièce et dans laquelle l'autre partie (32) de l'anneau (28) est fermement fixée à la seconde demi-roue (12) pour former une construction d'une seule pièce.

3. Roue selon la revendication 1 ou 2, dans laquelle l'anneau (28) présente des bords recourbés en direction de la jante.

4. Roue selon l'une quelconque des revendications 1 à 3, dans laquelle la partie (30), mentionnée, de l'anneau (38) est fixée à la première demi-roue (10) par une âme (34) qui s'étend radialement vers l'extérieur à partir de la première demi-roue (10) pour former une construction d'une seule pièce et dans laquelle l'autre partie (32) de l'anneau (28) est fixée à la seconde demi-roue (12) par une âme (36) qui s'étend radialement vers l'extérieur depuis la seconde demi-roue (12) jusqu'à cette autre partie (32) de l'anneau (28) pour former une construction d'une seule pièce.

5. Roue de véhicule selon l'une quelconque des revendications 1 à 4, caractérisée en ce que la première demi-roue circulaire (10) comporte une portion de la jante, incluant l'une de ses bords, ainsi qu'un moyeu circulaire (20) située à l'intérieur de la jante, le moyeu (20) présentant une portion périphérique en creux et une portion centrale en saillie;
la seconde demi-roue (12) comportant le reste de la jante, incluant son autre bord, ainsi qu'un rebord annulaire (22) qui s'étend vers l'intérieur et qui définit une ouverture circulaire à travers la portion de la jante, la portion périphérique en creux du moyeu (20) recevant le rebord (22) pour permettre à la portion centrale du moyen (20) de venir s'ajuster, par un ajustement serré, dans la région annulaire entourée par le rebord (22).

6. Roue selon la revendication 5, caractérisée en ce que les parties (30, 32) de l'anneau (28) présentent deux interfaces selon une oblique (38), l'oblique (38) des deux interfaces présentant la même direction.

7. Roue selon la revendication 5, dans laquelle les moyens de sécurité comportent des moyens pour brider le rebord (22) sur le moyeu (20).

8. Roue selon l'une quelconque des revendications 5 à 7, dans laquelle les surfaces associées de la partie périphérique en creux et du rebord (22) sont coniques pour faciliter leur alignement.

FIG. 1

FIG. 3

*Fig. 2.*

0 147 495

*Fig. 4.*

*Fig. 5.*

3